# EUROPÄISCHE PATENTSCHRIFT

(11) **EP 3 967 017 B1**
(45) Veröffentlichungstag und Bekanntmachung des Hinweises auf die Patenterteilung: **12.11.2025**
(21) Anmeldenummer: 20735067.9
(22) Anmeldetag: 10.06.2020
(51) Int. Cl.: H04L 9/40, H04L 12/46

(54) **VERFAHREN, VORRICHTUNG, COMPUTERPROGRAMM, COMPUTERLESBARES SPEICHERMEDIUM, SYSTEM UND SCHIENEFAHRZEUG ZUM BETREIBEN EINER NETZWERKWEICHE, BEISPIELSWEISE SWITCH ODER ROUTER**
METHOD, APPARATUS, COMPUTER PROGRAM, COMPUTER-READABLE STORAGE MEDIUM, SYSTEM AND RAIL VEHICLE FOR OPERATING A NETWORK SWITCH, FOR EXAMPLE A SWITCH OR ROUTER
PROCÉDÉ, DISPOSITIF, PROGRAMME D'ORDINATEUR, SUPPORT D'ENREGISTREMENT LISIBLE PAR ORDINATEUR, SYSTÈME ET VÉHICULE FERROVIAIRE, POUR FAIRE FONCTIONNER UN AIGUILLAGE DE RÉSEAU, PAR EXEMPLE COMMUTATEUR OU ROUTEUR

(30) Priorität: 04.07.2019 DE 102019209852
(43) Veröffentlichungstag der Anmeldung: 16.03.2022
(73) Patentinhaber: Siemens Mobility GmbH, 80997 München (DE)
(72) Erfinder: BRAUN, Thorsten, 91088 Bubenreuth (DE)
(74) Vertreter: Siemens Patent Attorneys
(86) Internationale Anmeldenummer: PCT/EP2020/066028
(87) Internationale Veröffentlichungsnummer: WO 2021/001123

(56) Entgegenhaltungen:
- US-A1- 2003 217 148
- US-A1- 2006 168 648
- US-A1- 2017 373 936
- US-A1- 2018 270 230

## Beschreibung

Es wird in Anspruch 1 ein erfindungsgemäßes Verfahren zum Betreiben einer Netzwerkweiche angegeben. Darüber hinaus werden in den verbleibenden unabhängigen Ansprüchen dazu korrespondierend eine Vorrichtung, ein Computerprogramm, ein computerlesbares Speichermedium, ein System und ein Schienenfahrzeug angegeben.

Die Offenlegungsschrift US 2003/217148 A1 betrifft ein Netzwerksystem und ein Verfahren zum Verbinden eines Computers mit dem Netzwerk. Hierbei wird eine Netzwerkweiche gemäß dem Oberbegriff des unabhängigen Patentanspruchs 1 betrieben.

Eine zu lösende Aufgabe besteht darin, ein Verfahren anzugeben, mit dem eine Netzwerkweiche flexibler und vielfältige einsetzbar ist. Weitere zu lösende Aufgaben bestehen darin, eine Vorrichtung, ein Computerprogramm, ein computerlesbares Speichermedium, ein System und ein Schienenfahrzeug anzugeben, mit oder in denen ein solches Verfahren durchführbar ist.

Gemäß zumindest einer Ausführungsform des Verfahrens zum Betreiben einer Netzwerkweiche weist die Netzwerkweiche mehrere Geräteanschlüsse auf. Unter einer Netzwerkweiche wird beispielsweise ein Switch oder ein Router verstanden. Eine Netzwerkweiche wird auch als Netzwerkknoten bezeichnet. Die Geräteanschlüsse einer Netzwerkweiche werden auch als Ports bezeichnet. Die Netzwerkweiche ist bevorzugt Teil eines Netzwerkes, zum Beispiel eines Ethernets. Das Netzwerk umfasst beispielsweise mehrere Netzwerkweichen, jeweils mit mehreren Geräteanschlüssen. Zum Beispiel handelt es sich um das Netzwerk in einem Schienenfahrzeug. Die Netzwerkweiche oder die mehreren Netzwerkweichen sind bevorzugt mit einem Zentralcomputer, auch Hostcomputer oder Server genannt, signaltechnisch verbunden.

Gemäß zumindest einer Ausführungsform umfasst das Verfahren einen Schritt A), in dem eine signaltechnische Verbindung eines elektrischen ersten Geräts zu einem Geräteanschluss der Netzwerkweiche erfasst wird. Mit einer signaltechnischen Verbindung zwischen dem elektrischen ersten Gerät und dem Geräteanschluss ist eine Verbindung gemeint, durch die ein Datenverkehr zwischen dem ersten Gerät und der Netzwerkweiche ermöglicht ist. Zum Beispiel ist durch die signaltechnische Verbindung ein Zugriff des Zentralcomputers auf das erste Gerät ermöglicht.

Das erste Gerät ist zum Beispiel ein Computer, wie ein Laptop, oder ein Sensor oder ein Element eines Überwachungssystems, zum Beispiel eine Überwachungskamera, oder eine Einheit eines Entertainmentsystems oder Infotainmentsystems, beispielsweise ein Fernsehgerät oder ein Tablet-PC. Wird das erste Gerät mit einem Geräteanschluss verbunden, so wird beispielsweise von der Netzwerkweiche ein so genanntes Ereignis ausgelöst. Zum Beispiel wird ein Datenpaket unaufgefordert von der Netzwerkweiche an den Zentralcomputer gesendet. Zum Beispiel wird ein SNMP-Trap (SNMP = Simple Network Management Protocol, zu Deutsch Einfaches Netzwerkverwaltungsprotokoll) an den Zentralcomputer gesendet. Das Erfassen dieses Ereignisses beziehungsweise dieses Datenpakets entspricht dann dem Erfassen einer signaltechnischen Verbindung des ersten Geräts zu einem Geräteanschluss.

Gemäß zumindest einer Ausführungsform umfasst das Verfahren einen Schritt B), in dem eine Authentifizierungsinformation erfasst wird. Die Authentifizierungsinformation ist repräsentativ für das erste Gerät. Beispielsweise handelt es sich bei der Authentifizierungsinformation um eine Adresse oder einen Code. In Abhängigkeit von der Authentifizierungsinformation ist das erste Gerät oder zumindest ein Gerätetyp des ersten Geräts bestimmbar. Die Authentifizierungsinformation wird insbesondere aus dem ersten Gerät ausgelesen und gelangt dann beispielsweise über den zugeordneten Geräteanschluss und die Netzwerkweiche zum Zentralcomputer, in dem die Authentifizierungsinformation dann erfasst wird. Der Schritt B) wird bevorzugt gleichzeitig mit dem Schritt A) ausgeführt.

Gemäß zumindest einer Ausführungsform umfasst das Verfahren einen Schritt C), in dem in Abhängigkeit von der Authentifizierungsinformation eine erste Gerätegruppe für das erste Gerät ermittelt wird. Anhand der Authentifizierungsinformation wird also ermittelt, welche erste Gerätegruppe dem ersten Gerät zugeordnet werden soll. Es ist möglich, dem ersten Gerät mehrere unterschiedliche Gerätegruppen zuzuordnen.

Eine Gerätegruppe ist dabei eine Gruppe, der ein oder mehrere elektrische Geräte zugeordnet sind oder zugeordnet werden. Unterschiedliche Geräte, die derselben Gerätegruppe zugeordnet sind, können vorzugsweise innerhalb des Netzwerkes miteinander kommunizieren. Geräte unterschiedlicher Gerätegruppen, die nicht einer gemeinsamen Gerätegruppe zugeordnet sind, können beispielsweise innerhalb des Netzwerks nicht oder nur eingeschränkt miteinander kommunizieren. Zum Beispiel ist oder wird jede Gerätegruppe einem logischen Teilnetz des Netzwerkes, einem sogenannten Virtual Local Area Network, kurz VLAN, zugeordnet, insbesondere eineindeutig zugeordnet.

Gemäß zumindest einer Ausführungsform umfasst das Verfahren einen Schritt D), in dem der Geräteanschluss, der mit dem ersten Gerät verbunden ist, der zuvor ermittelten ersten Gerätegruppe zugeordnet wird. Durch die Zuordnung der Geräteanschlüsse zu Gerätegruppen wird insbesondere festgelegt, welche an die Netzwerkweiche angeschlossenen Geräte wie innerhalb des Netzwerkes kommunizieren können. Insbesondere erfolgt also durch die Zuordnung des Geräteanschlusses zu einer Gerätegruppe auch eine Zuordnung zu einem VLAN oder zu mehreren VLANs. Die Zuordnung erfolgt bevorzugt durch den Zentralcomputer.

Für die Umsetzung der Zuordnung des Geräteanschlusses zu einer Gerätegruppe wird zum Beispiel von dem Zentralcomputer ein Befehl oder ein Datenpaket erzeugt, beispielsweise in Form eines SNMP-Set, und anschließend an die Netzwerkweiche geschickt.

Gemäß zumindest einer Ausführungsform umfasst das Verfahren einen Schritt E). Der Schritt E) wird ausgeführt, falls ein oder mehrere weitere Geräteanschlüsse der Netzwerkweiche der ersten Gerätegruppe zugeordnet sind und mit weiteren elektrischen Geräten verbunden sind. Im Schritt E) wird eine Kommunikation zwischen dem ersten Gerät und den weiteren Geräten der ersten Gerätegruppe freigeschaltet. Dass ein Gerät der ersten Gerätegruppe zugeordnet ist bedeutet vorliegend, dass das Gerät mit einem Geräteanschluss signaltechnisch verbunden ist und dieser Geräteanschluss der ersten Gerätegruppe zugeordnet ist. Das Freischalten der Kommunikation erfolgt insbesondere durch den Zentralcomputer.

In mindestens einer Ausführungsform des Verfahrens zum Betreiben einer Netzwerkweiche, wobei die Netzwerkweiche mehrere Geräteanschlüsse aufweist, umfasst das Verfahren die Schritte:
A) Erfassen einer signaltechnischen Verbindung eines elektrischen ersten Geräts zu einem Geräteanschluss der Netzwerkweiche;
B) Erfassen einer Authentifizierungsinformation, wobei die Authentifizierungsinformation repräsentativ für das erste Gerät ist;
C) Ermitteln einer ersten Gerätegruppe für das erste Gerät in Abhängigkeit von der Authentifizierungsinformation;
D) Zuordnen des mit dem ersten Gerät verbundenen Geräteanschlusses zu der ersten Gerätegruppe;
   und, falls ein oder mehrere weitere Geräteanschlüsse der ersten Gerätegruppe zugeordnet sind und mit weiteren elektrischen Geräten verbunden sind,
E) Freischalten einer Kommunikation zwischen dem ersten Gerät und den weiteren Geräten der ersten Gerätegruppe.

Der vorliegenden Erfindung liegt insbesondere die Erkenntnis zu Grunde, dass in einem Datennetzwerk, beispielsweise in einem Datennetzwerk eines Schienenfahrzeuges, zahlreiche elektrische Geräte an das Datennetzwerk angebunden sind. Über das Netzwerk, was zum Beispiel ein Ethernet ist, können diese Geräte untereinander kommunizieren. Mithilfe von Knotenelementen des Netzwerkes beziehungsweise Netzwerkweichen, zum Beispiel in Form von Switches und/oder Routern, werden die elektrischen Geräte in verschiedene Gerätegruppen unterteilt und der Datenverkehr dieser voneinander separiert. So kann der Datenverkehr einer Gerätegruppe von der anderen Gerätegruppe nicht gesehen und/oder beeinträchtigt werden. Ein elektrisches Gerät, beispielsweise der Typ dieses Geräts, muss dazu einer Gerätegruppe zugeordnet werden.

Als Netzwerkweiche in dem Netzwerk kann einerseits eine vorkonfiguriert Netzwerkweiche, auch Managed Ethernet Switch genannt, verwendet werden. Eine solche vorkonfigurierte Netzwerkweiche verfügt über eine feste Konfiguration oder Projektierung. Ein Geräteanschluss an einer solchen Netzwerkweiche ist also von Anfang an einer bestimmten Gerätegruppe zugeordnet. Eine Gerätegruppe wiederum ist oder wird einem VLAN zugeordnet. In diesem Fall muss also ein elektrisches Gerät mit einem fest definierten Geräteanschluss verbunden werden, um der passenden Gerätegruppe zugeordnet zu werden. Wird ein elektrisches Gerät versehentlich oder vorsätzlich an einem Geräteanschluss einer nicht dafür vorgesehenen Gerätegruppe angeschlossen, so kann dieses mit den anderen Geräten aus dieser Gerätegruppe kommunizieren, was zu Sicherheitsproblemen führen kann. Soll andererseits ein zusätzliches elektrisches Gerät an eine Netzwerkweiche angeschlossen werden und einer bestimmten Gerätegruppe zugeordnet werden und sind die noch freien Geräteanschlüsse der Netzwerkweiche anderen Gerätegruppen zugeordnet, so muss zuerst die Konfiguration der Netzwerkweiche modifiziert werden, um dem freien Geräteanschluss die gewünschte Gerätegruppe (das gewünschte VLAN) zuzuordnen.

Mit dem hier beschriebenen Verfahren wird eine dynamische Zuordnung der elektrischen Geräte zu Gerätegruppen ermöglicht. Damit werden die eben genannten Probleme gelöst.

Gemäß zumindest einer Ausführungsform ist zumindest ein Geräteanschluss der Netzwerkweiche zumindest einer weiteren Gerätegruppe zugeordnet. Der der weiteren Gerätegruppe zugeordnete Geräteanschluss ist mit einem weiteren elektrischen Gerät verbunden. Die weitere Gerätegruppe unterscheidet sich von der ersten Gerätegruppe und ist bevorzugt einem andere VLAN als die erste Gerätegruppe zugeordnet. Es ist insbesondere möglich, dass mehrere Geräteanschlüsse einer oder mehreren weiteren Gerätegruppen zugeordnet sind und jeweils mit einem elektrischen Gerät verbunden sind.

Gemäß zumindest einer Ausführungsform wird im Schritt E) eine Kommunikation zwischen dem ersten Gerät und dem weiteren Gerät der weiteren Gerätegruppe gesperrt. Das erste Gerät und das weitere Gerät können also nicht miteinander kommunizieren. Damit kann beispielsweise verhindert werden, dass mit dem ersten Gerät Schaden an dem oder den weiteren Geräten des Netzwerkes angerichtet wird.

Gemäß zumindest einer Ausführungsform ist die Authentifizierungsinformation ein digitales Zertifikat, insbesondere ein Public-Key-Zertifikat. Das Zertifikat ist zum Beispiel ein X.509 Zertifikat nach ITU-T Standard (ISO/IEC 9594-8). Das Zertifikat ist auf dem ersten Gerät gespeichert. Das Zertifikat ist repräsentativ für den Gerätetyp des ersten Geräts. Der Gerätetyp eines Geräts ist insbesondere repräsentativ für die Funktion des Geräts. Ein erster Gerätetyp repräsentiert beispielsweise Geräte für eine Sicherheitsüberwachung. Ein zweiter Gerätetyp repräsentiert beispielsweise Geräte für ein Unterhaltungssystem (Entertainment-System oder Infotainment-System).

Gemäß zumindest einer Ausführungsform wird in einem Schritt F) ermittelt, ob das digitale Zertifikat vertrauenswürdig ist. Nach dem Verbinden des ersten Geräts mit dem Geräteanschluss beziehungsweise nach einem anschließenden Einschalten des ersten Geräts, wird das erste Gerät also authentifiziert. Beispielsweise kommuniziert die Netzwerkweiche dazu mit dem Zentralcomputer nach dem IEEE 802.1X Standard. Die Ermittlung, ob das Zertifikat vertrauenswürdig ist, erfolgt beispielsweise auf Basis einer digitalen Signatur.

Gemäß zumindest einer Ausführungsform wird in Abhängigkeit von dem Ergebnis aus dem Schritt F) der Schritt D) ausgeführt. Beispielsweise wird mithilfe einer Datenbank zunächst geprüft, welcher ersten Gerätegruppe das mittels des Zertifikats identifizierte erste Gerät zugeordnet ist (Schritt C)). In den Schritten D) und E) wird dann zum Beispiel der Netzwerkweiche die Gerätegruppe zurückgemeldet und die Netzwerkweiche ordnet dem Geräteanschluss die entsprechende erste Gerätegruppe zu und schaltet eine entsprechende Kommunikation frei oder sperrt sie.

Bei Verwendung eines Zertifikats als Authentifizierungsinformation ist eine erhöhte Sicherheit für das Netzwerk gegeben. Statt eines Zertifikats können aber auch andere Informationen als Authentifizierungsinformationen verwendet werden. Eventuell ist dann eine Sicherheit des Netzwerks geringer, aber die Flexibilität des Verfahrens erhöht.

Gemäß zumindest einer Ausführungsform ist die Authentifizierungsinformation eine MAC-Adresse des ersten Geräts.

Gemäß zumindest einer Ausführungsform wird im Schritt C) in Abhängigkeit von der Authentifizierungsinformation und mithilfe einer Datenbank die erste Gerätegruppe ermittelt. Die Datenbank ist zum Beispiel auf dem Zentralcomputer gespeichert. In der Datenbank ist insbesondere eine Zuordnung zwischen Authentifizierungsinformationen und Gerätegruppen gespeichert. Beispielsweise ist eine Zuordnung von verschiedenen Gerätetypen zu verschieden Gerätegruppen oder eine Zuordnung von erfassten MAC-Adressen zu verschiedenen Gerätegruppen hinterlegt.

Gemäß zumindest einer Ausführungsform wird im Schritt C) zunächst überprüft, ob eine Zuordnung der Authentifizierungsinformationen zu einer ersten Gerätegruppe in einer Datenbank hinterlegt ist. Dabei handelt es sich zum Beispiel um die zuvor erwähnte Datenbank. Falls eine Zuordnung in der Datenbank hinterlegt ist, wird die erste Gerätegruppe in Abhängigkeit von dieser Zuordnung ermittelt. Falls keine Zuordnung in der Datenbank hinterlegt ist, wird eine Prüfprozedur durchgeführt, wobei in Abhängigkeit von der Prüfprozedur der Gerätetyp des ersten Geräts ermittelt wird und anschließend in Abhängigkeit von dem ermittelten Gerätetyp des ersten Geräts die erste Gerätegruppe ermittelt wird.

Beispielsweise wird folgende Prüfprozedur durchgeführt. Ein Programm wird ausgeführt, zum Beispiel durch den Zentralcomputer. Das Programm versucht eine Verbindung zu einem Identifikationsservice des ersten Geräts herzustellen. Dazu steht beispielsweise auf dem ersten Gerät ein http-Webserver und ein darauf laufender Webservice bereit. Die Datenstruktur des Webservices ist standardisiert, so dass der Gerätetyp bei allen Geräten gleichermaßen ausgelesen werden kann. Damit ist der Gerätetyp bestimmt.

Falls in der Datenbank keine Zuordnung der Authentifizierungsinformation zu einer ersten Gerätegruppe hinterlegt ist, können auch mehrere Prüfprozeduren zur Ermittlung des Gerätetyps durchgeführt werden.

Eine Zuordnung der Gerätetypen zu unterschiedlichen Gerätegruppen ist beispielsweise in der Datenbank auf dem Zentralcomputer hinterlegt. So kann das erste Gerät der ersten Gerätegruppe zugeordnet werden.

Nach der Ermittlung des Gerätetyps und der ersten Gerätegruppe wird bevorzugt eine Zuordnung der Authentifizierungsinformation, insbesondere der MAC-Adresse, des ersten Geräts zu der ersten Gerätegruppe hinterlegt, insbesondere in der Datenbank.

Gemäß zumindest einer Ausführungsform wird vor dem Schritt D) der Geräteanschluss, der mit dem ersten Gerät verbunden ist, einer isolierten Gruppe zugeordnet. Die Zuordnung des Geräteanschlusses zur isolierten Gerätegruppe kann bereits vor dem Anschließen des ersten Geräts an den Geräteanschluss vorliegen. Bei der Zuordnung zur isolierten Gerätegruppe handelt es sich zum Beispiel um eine Standardzuordnung (Default-Zuordnung).

Gemäß zumindest einer Ausführungsform ist eine Kommunikation zwischen Geräten der isolierten Gerätegruppe mit Geräten aus der ersten Gerätegruppe und bevorzugt mit Geräten aus allen anderen Gerätegruppen, gesperrt. Alternativ oder zusätzlich ist ein Datenverkehr der Geräte aus der isolierten Gerätegruppe gegenüber einem Datenverkehr der Geräte aus der ersten Gerätegruppe oder aus allen anderen Gerätegruppen benachteiligt. Alternativ oder zusätzlich wird ein der isolierten Gerätegruppe zugeordneter Geräteanschluss von der Kommunikation ausgeschlossen oder deaktiviert. Zum Beispiel erzeugt der Zentralcomputer dazu einen entsprechenden SNMP-Befehl, welcher anschließend an die Netzwerkweiche gesendet wird.

Geräte aus der isolierten Gerätegruppe können beispielsweise untereinander kommunizieren. Wird das Verfahren in einem Schienenfahrzeug mit mehreren Waggons eingesetzt, so können bevorzugt die der isolierten Gerätegruppe zugeordneten Geräte nur innerhalb eines Waggons miteinander kommunizieren. Die Geräte der ersten oder der weiteren Gerätegruppe können bevorzugt auch waggonübergreifend kommunizieren.

Darüber hinaus werden bevorzugt auch diejenigen Geräte der isolierten Gerätegruppe zugeordnet, die keiner Gerätegruppe zuordenbar sind. Kann beispielsweise einem elektrischen Gerät keine Gerätegruppe zugeordnet werden, auch nicht mithilfe der oben genannten Prüfprozedur, so verbleibt bevorzugt das Gerät in der isolierten Gerätegruppe.

Die isolierte Gerätegruppe ist also eine Quarantänegruppe, der noch nicht identifizierte Geräte oder nicht identifizierbare Geräte zugeordnet werden. Dadurch kann die Sicherheit in dem Netzwerk weiter erhöht werden. Bevorzugt wird, falls ein Gerät keiner Gerätegruppe außer der isolierten Gerätegruppe zuordenbar ist, eine Meldung an ein übergeordnetes Diagnosesystem gesendet.

Ein zusätzlicher, optionaler Verfahrensschritt in dem Verfahren besteht darin, dass nach der Ermittlung der ersten Gerätegruppe für das erste Gerät Servicepersonal die Zuordnung manuell freischaltet. Erst dann wird der der Zuordnung entsprechende Befehl an die Netzwerkweiche gesendet.

Das hier beschriebene Verfahren, insbesondere die Verfahrensschritte A), B), C), D), E) und F) sind alle auf einem Computer, zum Beispiel dem Zentralcomputer, durchführbar. Bei dem Verfahren handelt es sich also bevorzugt um ein computerimplementiertes Verfahren.

Als nächstes wird die Vorrichtung angegeben. Die Vorrichtung umfasst einen Prozessor, der so eingerichtet ist, dass er das Verfahren nach einem der vorhergehenden Ansprüche ausführt. Bei der Vorrichtung handelt es sich insbesondere um den zuvor erwähnten Zentralcomputer.

Als nächstes werden das Computerprogramm und das computerlesbare Speichermedium angegeben. Das Computerprogramm und das computerlesbare Speichermedium umfassen Befehle, die bei der Ausführung des Programms durch einen Computer diesen veranlassen, das hier beschriebene Verfahren auszuführen.

Als nächstes wird das System angegeben. Das System ist insbesondere zur Durchführung des hier beschriebenen Verfahrens eingerichtet. Alle im Zusammenhang mit dem Verfahren offenbarten Merkmale sind daher auch für das System offenbart und umgekehrt.

Gemäß zumindest einer Ausführungsform umfasst das System eine Netzwerkweiche mit zumindest einem Geräteanschluss, eine hier beschriebene Vorrichtung und ein erstes elektrisches Gerät. Die Vorrichtung ist signaltechnisch mit der Netzwerkweiche gekoppelt. Beispielsweise umfasst das System mehrere Netzwerkweichen, die alle signaltechnisch mit der Vorrichtung gekoppelt sind.

Schließlich wird ein Schienenfahrzeug angegeben. Das Schienenfahrzeug umfasst ein hier beschriebenes System. Beispielsweise umfasst das Schienenfahrzeug mehrere Waggons. Je einem Waggon sind bevorzugt mehrere Netzwerkweichen des Systems zugeordnet, beispielsweise zwischen einschließlich zwei und einschließlich zehn Netzwerkweichen. Mehrere Waggons beziehungsweise die zugehörigen Netzwerkweichen können gemeinsam der Vorrichtung zugeordnet sein.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Gleiche, gleichartige oder gleich wirkende Elemente sind in den Figuren mit den gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder für eine bessere Verständlichkeit übertrieben groß dargestellt sein.

Es zeigen:
Figuren 1 bis 4 Ausführungsbeispiele des Systems sowie verschiedene Positionen in einem Ausführungsbeispiel des Verfahrens,
Figuren 5 bis 8 Ablaufdiagramme zu Ausführungsbeispielen des Verfahrens,
Figur 9 ein Ausführungsbeispiel eines Schienenfahrzeuges.

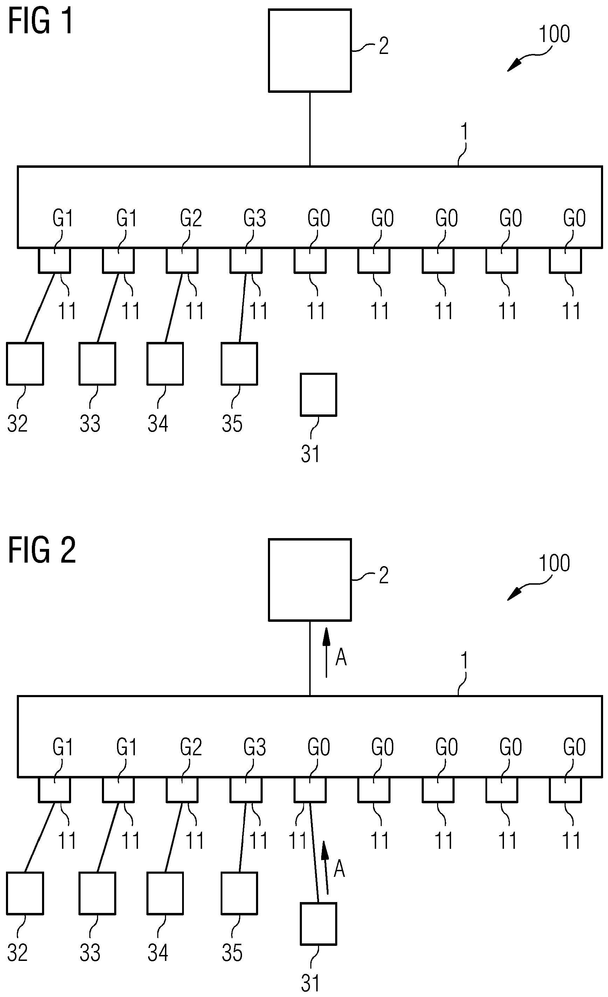

Figur 1 zeigt ein Ausführungsbeispiel des Systems. Das System umfasst eine Vorrichtung 2, beispielsweise einen Zentralcomputer (Server), eine Netzwerkweiche 1 und ein elektrisches, erstes Gerät 31. Die Netzwerkweiche 1 umfasst eine Mehrzahl von Geräteanschlüssen 11. Ferner umfasst das System 100 weitere elektrische Geräte 32, 33, 34, 35, die über Geräteanschlüsse 11 signaltechnisch mit der Netzwerkweiche 1 und der Vorrichtung 2 gekoppelt sind. Das erste Gerät 31 ist noch nicht signaltechnisch mit der Netzwerkweiche 1 gekoppelt.

In der Figur 1 ist zu erkennen, dass die Geräteanschlüsse 11 unterschiedlichen Gerätegruppen G0, G1, G2, G3 zugeordnet sind. Die bereits angeschlossenen, weiteren Geräte 32, 33, 34, 35 sind mit Geräteanschlüssen 11 verbunden, die einer ersten Gerätegruppe G1, einer zweiten Gerätegruppe G2 und einer dritten Gerätegruppe G3 zugeordnet sind. Die nicht mit elektrischen Geräten verbundenen Geräteanschlüsse 11 sind einer isolierten Gerätegruppe G0 zugeordnet.

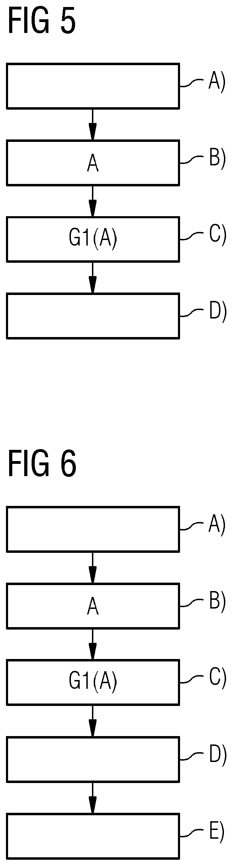

Figur 2 zeigt eine Position in dem Verfahren, in der das erste Gerät 31 signaltechnisch mit einem Geräteanschluss 11 verbunden wird. In dem Verfahren wird nun in einem Schritt A) erfasst, dass eine signaltechnisch Verbindung des ersten Geräts 31 zu einem Geräteanschluss 11 der Netzwerkweiche 1 erfolgt ist (siehe auch Figuren 5 bis 8).

Ferner wird in einem Schritt B) des Verfahrens (siehe auch Figuren 5 bis 8) eine Authentifizierungsinformation A erfasst. Die Authentifizierungsinformation A ist repräsentativ für das erste Gerät 31. Beispielsweise wird die Authentifizierungsinformation A in Form eines Datenpaketes ausgehend vom ersten Gerät 31 über die Netzwerkweiche 1 zur Vorrichtung 2 gesendet und dort erfasst.

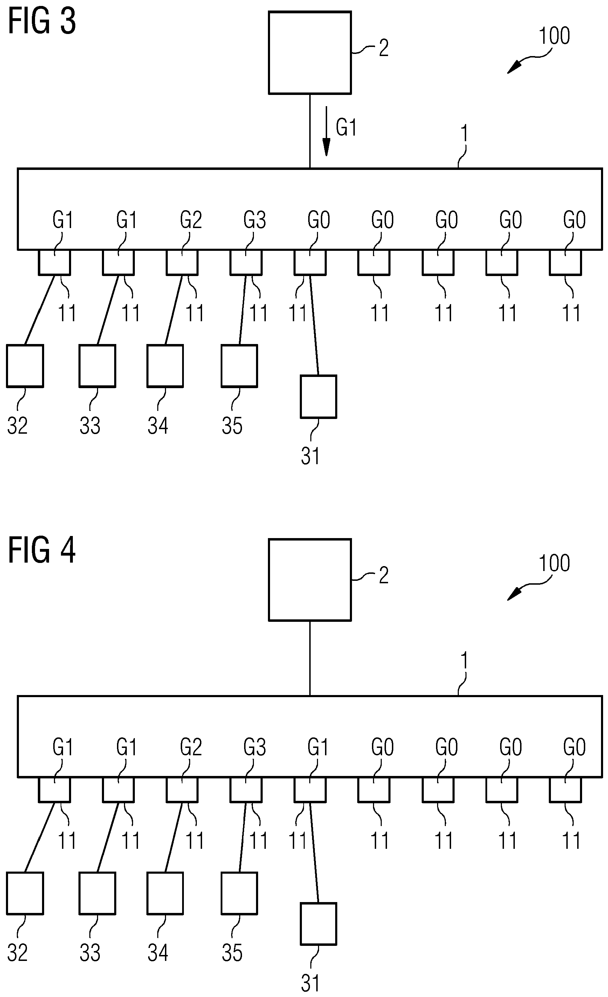

In der Figur 3 ist eine Position in dem Verfahren gezeigt, in der ein Schritt C) des Verfahrens durchgeführt wird (siehe auch Figuren 5 bis 8). In Abhängigkeit von der Authentifizierungsinformation A wird eine erste Gerätegruppe G1 für das erste Gerät 31 ermittelt. Dies geschieht durch die Vorrichtung 2. Ferner wird in einem Schritt D) des Verfahrens der mit dem ersten Gerät 31 verbundene Geräteanschluss 11 der ersten Gerätegruppe G1 zugeordnet. Die Zuordnung erfolgt beispielsweise durch die Vorrichtung 2 und wird in der Vorrichtung 2 abgespeichert. Infolge der Zuordnung wird dann ein Befehl von der Vorrichtung 2 an die Netzwerkweiche 1 gesendet, mit dem der Geräteanschluss 11 der ersten Gerätegruppe G1 zugeordnet wird (siehe Figur 4).

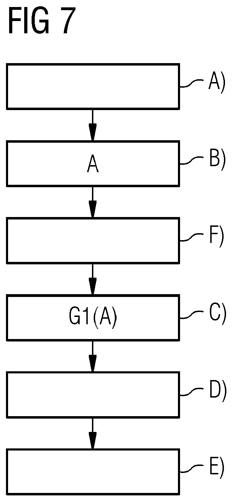

In dem hier beschriebenen Fall sind bereits weitere elektrische Geräte 32, 33 jeweils mit einem Geräteanschluss 11 verbunden, der der ersten Gerätegruppe G1 zugeordnet ist. Bei dem Verfahren wird nun noch ein Schritt E) ausgeführt (siehe auch Figuren 6 und 7), in dem eine Kommunikation zwischen dem ersten Gerät 31 und den weiteren Geräten 32, 33 der ersten Gerätegruppe G1 freigeschaltet wird. Gleichzeitig wird zum Beispiel eine Kommunikation des ersten Geräts 31 zu Geräten 34, 35 der weiteren Gerätegruppen G1, G2, G0 gesperrt.

Das Ablaufdiagramm der Figur 7 unterscheidet sich von dem Ablaufdiagramm der Figur 6 durch einen zusätzlich ausgeführten Schritt F). Bei dem in Figur 7 gezeigten Verfahren handelt es sich bei der Authentifizierungsinformation A um ein Zertifikat. Im Schritt F) wird ermittelt, ob das Zertifikat vertrauenswürdig ist. Falls dies erfüllt ist, werden die Schritte D) und E) ausgeführt.

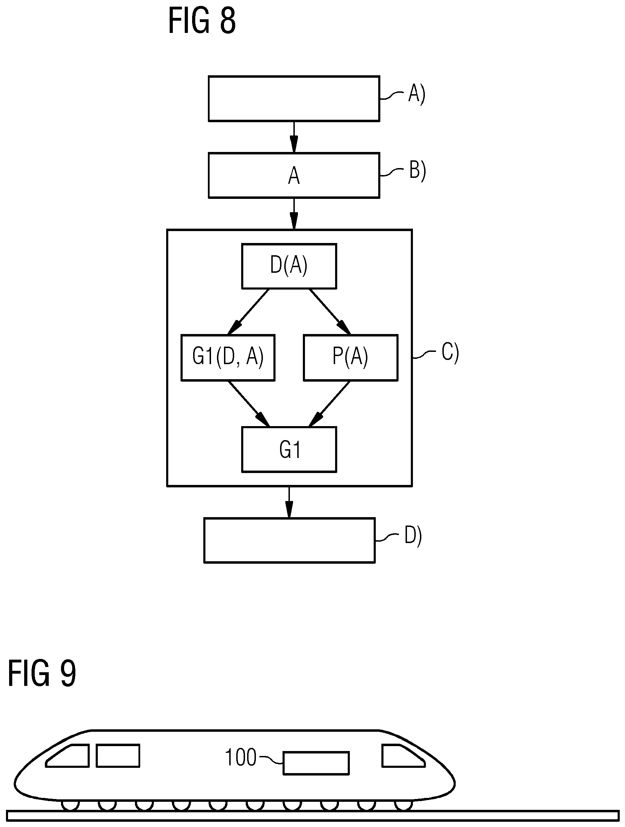

In der Figur 8 ist ein Ablaufdiagramm dargestellt, bei dem im Schritt C) zunächst überprüft wird, ob eine Zuordnung der Authentifizierungsinformationen A zu einer ersten Gerätegruppe G1 in einer Datenbank D hinterlegt ist. Falls eine Zuordnung in der Datenbank D hinterlegt ist, wird die erste Gerätegruppe G1 in Abhängigkeit von dieser Zuordnung ermittelt (linker Pfad im Ablaufdiagramm). Falls keine Zuordnung in der Datenbank D hinterlegt ist, wird eine Prüfprozedur P durchgeführt, wobei mithilfe der Prüfprozedur P und der Authentifizierungsinformation A der Gerätetyp des ersten Geräts 31 ermittelt wird und anschließend in Abhängigkeit von dem ermittelten Gerätetyp des ersten Geräts 31 die erste Gerätegruppe G1 ermittelt wird (rechter Pfad im Ablaufdiagramm).

In der Figur 9 ist ein Schienenfahrzeug mit einem System 100, beispielsweise mit dem System 100 aus der Figur 1 gezeigt.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: Netzwerkweiche
- 11: Geräteanschluss
- 2: Vorrichtung
- 31: elektrisches erstes Gerät
- 32,33,34,35: weitere elektrische Geräte
- G1: erste Gerätegruppe
- G0: isolierte Gerätegruppe
- G2, G3: weitere Gerätegruppen
- A: Authentifizierungsinformation
- D: Datenbank
- P: Prüfprozedur
- 100: System

## Patentansprüche

1. Verfahren zum Betreiben einer Netzwerkweiche (1),
wobei
- die Netzwerkweiche (1) mehrere Geräteanschlüsse (11) aufweist,
- das Verfahren die Schritte umfasst:
A) Erfassen einer signaltechnischen Verbindung eines elektrischen ersten Geräts (31) zu einem Geräteanschluss (11) der Netzwerkweiche (1);
B) Erfassen einer Authentifizierungsinformation (A), wobei die Authentifizierungsinformation (A) repräsentativ für das erste Gerät (31) ist;
C) Ermitteln einer ersten Gerätegruppe (G1) für das erste Gerät (31) in Abhängigkeit von der Authentifizierungsinformation (A);
D) Zuordnen des mit dem ersten Gerät (31) verbundenen Geräteanschlusses (11) zu der ersten Gerätegruppe (G1); und, falls ein oder mehrere weitere Geräteanschlüsse (11) der ersten Gerätegruppe (G1) zugeordnet sind und mit weiteren elektrischen Geräten (32, 33) verbunden sind,
E) Freischalten einer Kommunikation zwischen dem ersten Gerät (31) und den weiteren Geräten (32, 33) der ersten Gerätegruppe (G1)
**dadurch gekennzeichnet, dass**
im Schritt C)
- zunächst überprüft wird, ob eine Zuordnung der Authentifizierungsinformation (A) zu einer ersten Gerätegruppe (G1) in einer Datenbank (D) hinterlegt ist,
- falls eine Zuordnung in der Datenbank (D) hinterlegt ist, die erste Gerätegruppe (G1) in Abhängigkeit von dieser Zuordnung ermittelt wird,
- falls keine Zuordnung in der Datenbank (D) hinterlegt ist, eine Prüfprozedur (P) durchgeführt wird, wobei in Abhängigkeit von der Prüfprozedur (P) der Gerätetyp des ersten Geräts (31) ermittelt wird und anschließend in Abhängigkeit von dem ermittelten Gerätetyp des ersten Geräts (31) die erste Gerätegruppe (G1) ermittelt wird.

2. Verfahren nach Anspruch 1, wobei
- zumindest ein Geräteanschluss (11) zumindest einer weiteren Gerätegruppe (G2, G3) zugeordnet ist und dieser Geräteanschluss (11) mit einem weiteren elektrischen Gerät (34, 35) verbunden ist,
- im Schritt E) eine Kommunikation zwischen dem ersten Gerät (31) und dem weiteren Gerät (34, 35) der weiteren Gerätegruppe (G2, G3) gesperrt wird.

3. Verfahren nach Anspruch 1 oder 2, wobei
- die Authentifizierungsinformation (A) ein digitales Zertifikat ist, wobei das digitale Zertifikat repräsentativ für den Gerätetyp des ersten Geräts (31) ist,
- in einem Schritt F) ermittelt wird, ob das digitale Zertifikat vertrauenswürdig ist und
- in Abhängigkeit von dem Ergebnis aus dem Schritt F) der Schritt D) ausgeführt wird.

4. Verfahren nach einem der Ansprüche 1 oder 2, wobei die Authentifizierungsinformation (A) eine MAC-Adresse des ersten Geräts (31) ist.

5. Verfahren nach einem der vorhergehenden Ansprüche, wobei im Schritt C) in Abhängigkeit von der Authentifizierungsinformation (A) und mithilfe einer Datenbank (D) die erste Gerätegruppe (G1) ermittelt wird.

6. Verfahren nach einem der vorhergehenden Ansprüche, wobei
- vor dem Schritt D) der Geräteanschluss (11), der mit dem ersten Gerät (31) verbunden ist, einer isolierten Gerätegruppe (G0) zugeordnet ist,
- eine Kommunikation zwischen Geräten der isolierten Gerätegruppe (G0) mit Geräten (31, 32) aus der ersten Gerätegruppe (G1) gesperrt ist, und/oder
- ein Datenverkehr der Geräte aus der isolierten Gerätegruppe (G0) gegenüber einem Datenverkehr der Geräte (31, 32) aus der ersten Gruppe (G1) benachteiligt ist.

7. Vorrichtung (2), umfassend einen Prozessor, der so eingerichtet ist, dass er das Verfahren nach einem der vorhergehenden Ansprüche ausführt.

8. Computerprogramm, umfassend Befehle, die bei der Ausführung des Programms durch einen Computer diesen veranlassen, das Verfahren nach einem der Ansprüche 1 bis 6 auszuführen.

9. Computerlesbares Speichermedium, umfassend Befehle, die bei der Ausführung durch einen Computer diesen veranlassen, das Verfahren nach einem der Ansprüche 1 bis 6 auszuführen.

10. System (100), umfassend:
- eine Netzwerkweiche (1) mit zumindest einem Geräteanschluss (11),
- eine Vorrichtung (2) nach Anspruch 7,
- ein erstes elektrisches Gerät (31), wobei
- die Vorrichtung (2) signaltechnisch mit der Netzwerkweiche (1) gekoppelt ist.

11. Schienenfahrzeug, umfassend ein System (100) nach Anspruch 10.

## Claims

1. Method for operating a network switch (1),
wherein
- the network switch (1) has a number of device terminals (11),
- the method comprises the steps:
A) detecting a connection for signalling purposes of an electrical first device (31) to a device terminal (11) of the network switch (1);
B) detecting authentication information (A), wherein the authentication information (A) is representative of the first device (31);
C) determining a first group of devices (G1) for the first device depending on the authentication information (A);
D) assigning the device terminal (11) connected to the first device (31) to the first group of devices (G1);
and, if one or a number of further device terminals (11) are assigned to the first group of devices (G1) and are connected to further electrical devices (32, 33),
E) enabling communication to take place between the first device (31) and the further devices (32, 33) of the first group of devices (G1),
**characterised in that**
in step C)
- it is first checked whether an assignment of the authentication information (A) to a first group of devices (G1) is stored in a database (D),
- if an assignment is stored in the database (D), the first group of devices (G1) is determined depending on this assignment,
- if there is no assignment stored in the database (D), a check procedure (P) is carried out, wherein the device type of the first device (31) is determined as a function of the check procedure (P), and the first group of devices (G1) is subsequently determined depending on the device type that is determined of the first device (31).

2. Method according to claim 1, wherein
- at least one device terminal (11) is assigned to at least one further group of devices (G2, G3) and this device terminal (11) is connected to a further electrical device (34, 35),
- in step E) communication between the first device (31) and the further device (34, 35) of the further group of devices (G2, G3) is blocked.

3. Method according to claim 1 or 2, wherein
- the authentication information (A) is a digital certificate, wherein the digital certificate is representative of the device type of the first device (31),
- in step F), it is determined whether the digital certificate is trustworthy and
- step D) is carried out depending on the result of step F).

4. Method according to one of claims 1 or 2, wherein
the authentication information (A) is a MAC address of the first device (31).

5. Method according to one of the preceding claims, wherein in step C) the first group of devices (G1) is determined depending on the authentication information (A) and by using a database (D) of the first group of devices (G1).

6. Method according to one of the preceding claims, wherein
- prior to step D), the device terminal (11) which is connected to the first device (31) is assigned to an isolated group of devices (G0),
- communication between devices of the isolated group of devices (G0) and devices (31, 32) from the first group of devices (G1) is blocked, and/or
- data traffic of the devices from the isolated group of devices (G0) is disadvantaged compared to data traffic of the devices (31, 32) from the first group (G1).

7. Apparatus (2), comprising a processor which is configured to carry out the method according to one of the preceding claims.

8. Computer program, comprising commands which, when the program is executed by a computer, prompt said computer to carry out the method according to one of claims 1 to 6.

9. Computer-readable storage medium, comprising commands which, when executed by a computer, prompt said computer to carry out the method according to one of claims 1 to 6.

10. System (100), comprising:
- a network switch (1) with at least one device terminal (11),
- an apparatus (2) according to claim 7,
- a first electrical device (31), wherein
- the apparatus (2) is coupled to the network switch (1) for signalling purposes.

11. Rail vehicle, comprising a system (100) according to claim 10.

## Revendications

1. Procédé pour faire fonctionner un aiguillage (1) de réseau, dans lequel
- l'aiguillage (1) de réseau a plusieurs bornes (11) d'appareil,
- le procédé comprend les stades :
A) détection d'une liaison en technique du signal d'un premier appareil (31) électrique à une borne (11) d'appareil de l'aiguillage (1) de réseau ;
B) détection d'une information (A) d'authentification, dans lequel l'information (A) d'authentification est représentative du premier appareil (31) ;
C) détermination d'un premier groupe (G1) d'appareils pour le premier appareil (31) en fonction de l'information (A) d'authentification ;
D) association de la borne (11) d'appareil, reliée au premier appareil (31), au premier groupe (G1) d'appareils ;
et, si une ou plusieurs autres bornes (11) d'appareil sont associées au premier groupe (G1) d'appareils et sont reliées à d'autres appareils (32, 33) électriques,
E) déconnexion d'une communication entre le premier appareil (31) et les autres appareils (32, 33) du premier groupe (G1) d'appareils,
**caractérisé en ce que**
dans le stade C)
- on contrôle d'abord, si une association de l'information (A) d'authentification à un premier groupe (G1) d'appareils est mise dans une base (D) de données,
- si une association est mise dans la base (D) de données, on détermine le premier groupe (G1) d'appareils en fonction de cette association,
- si une association n'est pas mise dans la base (D) de données, on effectue une procédure (P) de contrôle, dans lequel on détermine en fonction de la procédure (P) de contrôle le type d'appareil du premier appareil (31) et on détermine ensuite le premier groupe (G1) d'appareils en fonction du type d'appareil déterminé du premier appareil (31).

2. Procédé suivant la revendication 1, dans lequel
- au moins une borne (11) d'appareil est associée à au moins un autre groupe (G2, G3) d'appareils et cette borne (11) d'appareil est connectée à un autre appareil (34, 35) électrique,
- dans le stade E) on barre une communication entre le premier appareil (31) et l'autre appareil (34, 35) de l'autre groupe (G2, G3) d'appareils.

3. Procédé suivant la revendication 1 ou 2, dans lequel
- l'information (A) d'authentification est un certificat numérique, dans lequel le certificat numérique est représentatif du type d'appareil du premier appareil (31),
- dans un stade F) on détermine, si le certificat numérique est digne de confiance et
- en fonction du résultat du stade F), on effectue le stade D).

4. Procédé suivant l'une des revendications 1 ou 2, dans lequel l'information (A) d'authentification est une adresse MAC du premier appareil (31).

5. Procédé suivant l'une des revendications précédentes, dans lequel
au stade C) on détermine le premier groupe (G1) d'appareils en fonction de l'information (A) d'authentification et à l'aide d'une base (D) de données.

6. Procédé suivant l'une des revendications précédentes, dans lequel
- avant le stade D) la borne (11) d'appareil, qui est connectée au premier appareil (31), est associée à un groupe (G0) d'appareils isolé,
- une communication entre des appareils du groupe (G0) d'appareils isolé avec des appareils (31, 32) du premier groupe (G1) d'appareils est barrée, et/ou
- une circulation de données des appareils du groupe (G0) d'appareils isolé est désavantagée par rapport à une circulation de données des appareils (31, 32) du premier groupe (G1).

7. Dispositif (2), comprenant un processeur, qui est agencé de manière à exécuter le procédé suivant l'une des revendications précédentes.

8. Programme d'ordinateur, comprenant des instructions, qui lors de l'exécution du programme par un ordinateur, font que celui-ci exécute le procédé suivant l'une des revendications 1 à 6.

9. Support de mémoire déchiffrable par ordinateur, comprenant des instructions, qui lors de l'exécution par un ordinateur, font que celui-ci exécute le procédé suivant l'une des revendications 1 à 6.

10. Système (100), comprenant :
- un aiguillage (1) de réseau ayant au moins une borne (11) d'appareil,
- un dispositif (2) suivant la revendication 7,
- un premier appareil (31) électrique, dans lequel
- le dispositif (2) est relié en technique du signal avec l'aiguillage (1) de réseau.

11. Véhicule ferroviaire, comprenant un système (100) suivant la revendication 10.
